# EUROPEAN PATENT SPECIFICATION

(11) **EP 0 743 445 B1**
(45) Date of publication and mention of the grant of the patent: **09.09.1998**
(21) Application number: 96201041.9
(22) Date of filing: 18.04.1996
(51) Int. Cl.: F02M 37/22, F02M 37/10

(54) **Fuel strainer**
Kraftstoffsieb
Tamis pour combustible

(30) Priority: 17.05.1995 US 443003
(43) Date of publication of application: 20.11.1996
(73) Proprietor: GENERAL MOTORS CORPORATION, Detroit Michigan 48202 (US)
(72) Inventor: Begley, Chris Clarence, Grand Blanc, Michigan 48439 (US); Dockery, Randall Lee, Flushing, Michigan 48433 (US); Coha, Timothy Francis, Burton, Michigan 48509 (US)
(74) Representative: Denton, Michael John

(56) References cited:
- US-A- 4 684 463
- US-A- 4 922 959
- US-A- 5 186 152
- PATENT ABSTRACTS OF JAPAN vol. 95, no. 007 & JP-A-07 180632 (NISSAN MOTOR CO LTD), 18 July 1995,
- PATENT ABSTRACTS OF JAPAN vol. 94, no. 011 & JP-A-06 323217 (AISAN IND CO LTD), 22 November 1994,

## Description

### FIELD OF THE INVENTION

This invention relates to strainers in motor vehicle fuel systems.

### BACKGROUND OF THE INVENTION

United States Patent 5,186,152, issued 16 February 1993 and assigned to the assignee of this invention, which is considered as the closest prior art, describes a motor vehicle fuel system including a fuel pump in a fuel tank of the vehicle supplying fuel to an engine of the vehicle, a return conduit for conducting surplus fuel from the engine back to the fuel tank, and a container around the fuel pump in which surplus fuel is confined to prevent mixture thereof with cooler bulk fuel in the tank so that heating of the bulk fuel and vapor generation in the fuel tank is minimized. An inlet of the fuel pump withdraws fuel from the container through a first strainer inside the container and from the fuel tank through a second strainer outside the container which cooperates with the first strainer to assure recirculation of the surplus fuel in preference to new bulk fuel from the fuel tank so that the container does not overflow.

### SUMMARY OF THE INVENTION

This invention is a new and improved strainer in a motor vehicle fuel system having a fuel pump mounted in a fuel tank of the vehicle supplying fuel to an engine of the vehicle and a return conduit for conducting surplus fuel from the engine back to the fuel tank. The strainer according to this invention includes a sealed bag made of a porous outer membrane exhibiting a known or predetermined first flow restriction, a partition inside the sealed bag made of a porous inner membrane exhibiting a known or predetermined second flow restriction less than the first flow restriction and dividing the sealed bag into a first fuel chamber and a second fuel chamber, and a vapor vent orifice across the outer membrane between the first fuel chamber and the fuel tank. The first fuel chamber is connected to the return conduit and receives therein all of the surplus fuel from the engine. The second fuel chamber is connected to an inlet of the fuel pump so that when the fuel pump is on, a low pressure zone in the second fuel chamber is separated from the first fuel chamber by the partition and from the fuel tank by the outer porous membrane. The lower flow restriction of the partition relative to the outer porous membrane permits flow of surplus fuel from the first fuel chamber into the second fuel chamber in preference to new bulk fuel from the fuel tank. Vapor in the first fuel chamber is blocked by capillary seals at the partition and at the outer membrane and is purged from the first fuel chamber through the vapor orifice.

### BRIEF DESCRIPTION OF THE DRAWING

Figure 1 is a perspective view of a fuel strainer according to this invention;
Figure 2 is an enlarged sectional view taken generally along the plane indicated by lines 2--2 in Figure 1;
Figure 3 is a fragmentary sectional view in elevation of a first motor vehicle fuel system having therein a fuel strainer according to this invention therein; and
Figure 4 is a fragmentary sectional view in elevation of a second motor vehicle fuel system having therein a fuel strainer according to this invention therein.

### DESCRIPTION OF PREFERRED EMBODIMENTS

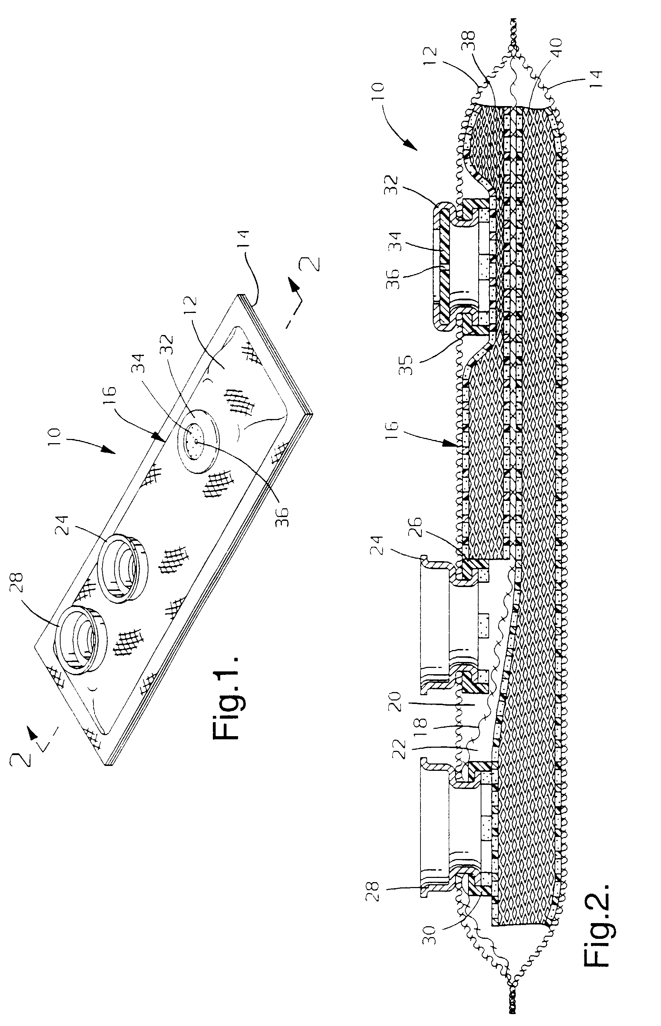

Referring to Figures 1-2, a fuel strainer 10 according to this invention includes a rectangular upper panel 12 and a rectangular lower panel 14. The upper and lower panels are made of a first or outer porous membrane consisting of fuel resistant synthetic fibers woven or otherwise arrayed in a pattern yielding similar micron-sized interstices, not shown, between the fibers and exhibiting a predetermined or known first restriction to fluid flow thereacross. The upper and lower panels are bonded to each other around their respective peripheries by heat fusion, adhesive, or otherwise to form a sealed bag 16.

The fuel strainer 10 further includes a rectangular partition 18, Figure 2, inside of the sealed bag 16 made of a second or inner porous membrane consisting of fuel resistant synthetic fibers woven or otherwise arrayed in a pattern yielding similar micron-sized interstices, not shown, between the fibers and exhibiting a predetermined or known second restriction to fluid flow thereacross less than the aforesaid first restriction to fluid flow across the outer porous membrane. Lower fluid flow restriction across the partition relative to the outer porous membrane is achieved by polymer selection, by fiber diameter selection, by fiber weave or other placement selection, and/or by fiber processing selection. The periphery of the partition 18 is sandwiched between the peripheries of the upper and lower panels 12, 14 so that the partition divides the interior of the sealed bag 16 into a first fuel chamber 20 and a second fuel chamber 22.

A first metal ferrule 24 is crimped onto the upper panel around a hole therein with a plastic separator 26 captured between the ferrule and the upper panel 12 and defines an entry to the first fluid chamber 20. A second metal ferrule 28 is crimped onto the upper panel 12 and onto the partition 18 around aligned holes in the upper panel and the partition with a plastic separator 30 captured between the ferrule and the partition. The second ferrule defines an entry to the second fluid chamber 22. A metal retainer 32 having a flat orifice plate 34 thereon is crimped onto the upper panel 12 around a hole therein. A plastic separator 35 is captured between the retainer 32 and the upper panel 12. The orifice plate 34 has a vapor orifice 36 therein open to the first fluid chamber 20.

A pair of tubular mesh reinforcements 38, 40 are disposed in the first and second fluid chambers 20, 22, respectively, to inhibit collapse of the chambers under pressure gradients between the inside and the outside of the sealed bag and between the first and second fluid chambers. The plastic separators 26, 30, 35 prevent the ferrules 24, 28 and the orifice 36 from being blocked in the event that the mesh reinforcements are overpowered and the sealed bag is flattened by extraordinary pressure gradients.

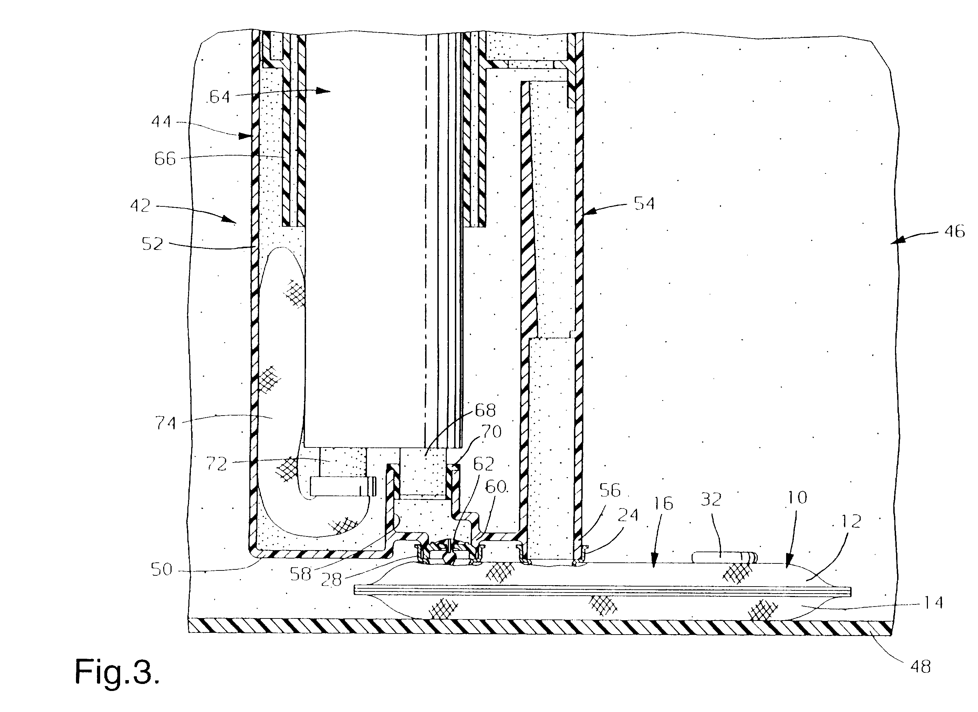

Referring to Figure 3, a first representative motor vehicle fuel system 42 includes a molded plastic reservoir 44 in a fuel tank 46 of the vehicle near a bottom panel 48 of the tank. The reservoir 44 has a bettom wall 50 parallel to and separated from the bottom panel 48 of the fuel tank and a cylindrical side wall 52. The reservoir includes an internal stand pipe 54 which traverses the bottom wall 50 of the reservoir and terminates at an annular boss 56 on the bottom wall. The reservoir 44 further includes a tubular inlet passage 58 which traverses the bottom wall of the reservoir and terminates at an annular boss 60 on the bottom wall. An umbrella type check valve 62 is mounted inside the boss 60 and prevents backflow from the reservoir into the fuel tank.

A fuel pump 64 of the fuel system 42 is mounted inside the reservoir 44 on a plastic retainer 66. The fuel pump 64 has a tubular first inlet 68 plugged into the inlet passage 58 with a seal 70 therebetween. The fuel pump 64 has a tubular second inlet 72 open to the reservoir through an inside strainer 74 clamped to the tubular second inlet. The fuel pump 64 also has a high pressure discharge, not shown, connected to an engine of the vehicle and a low pressure discharge, not shown, open to the reservoir. A return conduit, not shown, conducts surplus fuel at low pressure from the engine back to the reservoir. The first and second ferrules 24, 28 are interference press fitted on the annular bosses 56, 60, respectively, on the bottom wall of the reservoir whereby the strainer 10 is mounted on the reservoir in the fuel tank between the bottom wall 50 of the reservoir and the bottom panel 48 of the fuel tank.

When fuel is present in the fuel tank 46 and in the reservoir 44 and the fuel pump is on, fuel enters the fuel pump 64 through the inside strainer 74 and the tubular second inlet 72. Fuel from the reservoir is pumped by the fuel pump to the engine at a generally constant flow rate which exceeds maximum engine demand. At the same time, suction at the tubular first inlet 68 of the fuel pump induces low pressure in the second fuel chamber 22 of the strainer 10 so that new bulk fuel from the fuel tank is induced to flow across the lower panel 14 into the second fuel chamber. From the second fuel chamber, fuel is pumped by the fuel pump at relatively low pressure into the reservoir at a flow rate which exceeds the rate at which fuel is withdrawn from the reservoir through the tubular second inlet 72.

The strainer 10 prevents the reservoir from overflowing into the fuel tank so that surplus fuel, which absorbs heat from the engine before being returned to the reservoir, does not mix with the bulk fuel in the fuel tank and promote vapor formation therein. For example, when engine demand is low, a maximum amount of surplus fuel is returned to the reservoir. The surplus fuel, combined with new bulk fuel being discharged into the reservoir through the aforesaid low pressure discharge of the fuel pump, overflows the top of the standpipe 54 and is conducted by the standpipe to the first fuel chamber 20. Any vapor which is conducted into the first fuel chamber 20 at the same time is blocked by a capillary seal at the partition 18. Because a capillary seal is also formed by the upper panel 12, vapor collecting in the first fuel chamber 20 discharges into the fuel tank 46 through the vapor orifice 36 in the orifice plate 34 without backing up into the standpipe.

The aforesaid low pressure in the second fuel chamber 22 induces a pressure gradient across the partition 18 and across the lower panel 14. Because the second restriction to fluid flow exhibited by the partition 18 is less than the first restriction to fluid flow exhibited by the lower panel 14, overflow from the standpipe flows into the second fuel chamber 22 in preference to new bulk fuel from the fuel tank and is recirculated back to the reservoir. Such recirculation of surplus fuel also extends the service life of the strainer 10 because bulk fuel is only filtered once by the upper and lower panels 12,14 instead of repeatedly as would occur if surplus fuel emptied back into the bulk fuel.

Under low fuel conditions in the fuel tank, bulk fuel in the tank may temporarily or momentarily migrate away from the strainer 10 during a turn. In that circumstance, capillary seals at the partition 18 and the lower panel 14 prevent dissipation of the low pressure zone within the second fuel chamber 22 so that the fuel pump 64 is immediately effective to commence replenishing the reservoir through the tubular first inlet 68 as soon as contact is reestablished between bulk fuel and the lower panel 14. Similarly, after an out-of-fuel event in which the fuel tank and reservoir are completely drained, the fuel pump 64 becomes effective to commence filling the reservoir as soon as the partition 18 and the lower panel 14, close to the bottom panel 48 of the fuel tank, make contact with new fuel poured into the fuel tank so that the quantity of new fuel required to restart the engine of the vehicle is minimized.

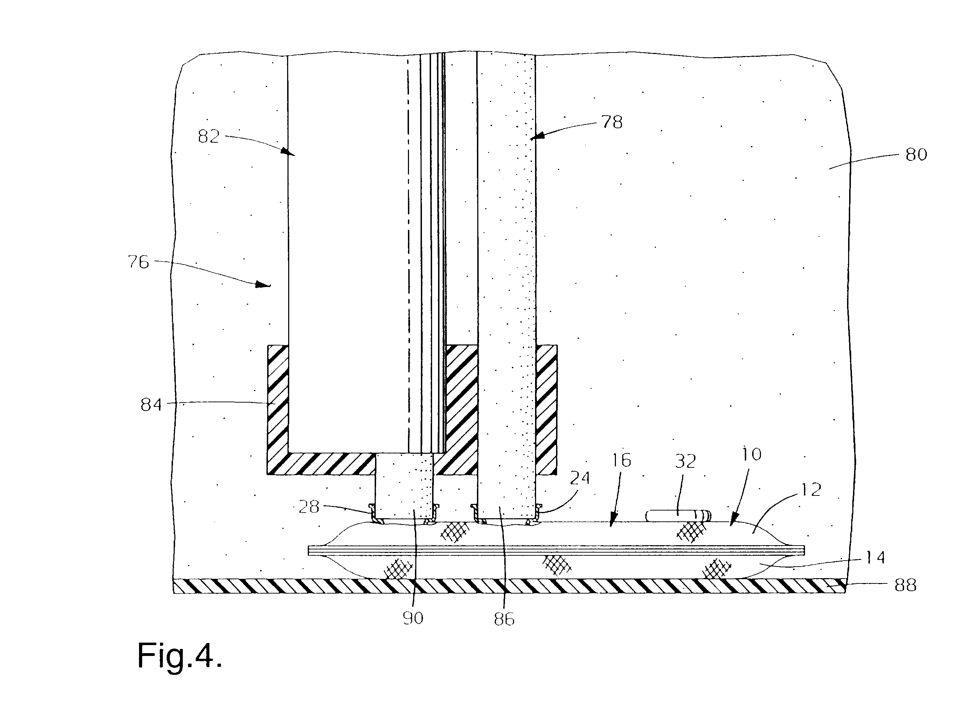

Referring to Figure 4, a second representative motor vehicle fuel system 76 includes a schematically represented vertical return pipe 78 in a fuel tank 80, a fuel pump 82, and a bracket 84 by which the fuel pump 82 is mounted on the return pipe 78 near a lower end 86 thereof vertically removed from a bottom panel 88 of the fuel tank. The fuel pump 82 has a tubular inlet 90 facing the bottom panel 88 of the fuel tank and a discharge, not shown, connected to an engine of the vehicle. A return conduit, not shown, is connected to the return pipe 78 and conducts surplus fuel from the engine back to the fuel tank. The first ferrule 24 of the strainer 10 is interference press fitted on the lower end 86 of the return pipe 78. The second ferrule 28 is interference press fitted on the tubular inlet 90 of the fuel pump 82 whereby the strainer 10 is mounted in the fuel tank between the bottom panel 88 of the fuel tank and the fuel pump.

When fuel is present in the fuel tank and the fuel pump is on, suction in the tubular inlet 90 of the fuel pump 82 induces low pressure in the second fuel chamber 22 of the strainer 10. New bulk fuel from the fuel tank is thereby induced to flow across the lower panel 14 into the second fuel chamber from which it flows into the tubular inlet 90 of the fuel pump. At the same time, surplus fuel is conducted by the return pipe 78 to the first fuel chamber 20 of the strainer. Vapor carried into the first fuel chamber 20 at the same time is blocked by a capillary seal at the partition 18. Because a capillary seal is also formed at the upper panel 12, vapor collecting in the first fuel chamber 20 discharges into the fuel tank 80 through the vapor orifice 36 in the orifice plate 34 without backing up into the return pipe.

The aforesaid low pressure in the second fuel chamber 22 induces a pressure gradient across the partition 18 and across the lower panel 14. Because the second restriction to fluid flow exhibited by the partition 18 is less than the first restriction to fluid flow exhibited by the lower panel 14, surplus fuel from the return pipe 78 flows into the second fuel chamber 22 in preference to new bulk fuel from the fuel tank and is recirculated back to the engine. Also, for the reason described above, recirculation of surplus fuel extends the service life of the strainer 10.

## Claims

1. A fuel strainer (10) in a motor vehicle fuel system (76) including
a fuel tank (80),
a fuel pump (82) having a discharge connected to an engine of said vehicle and an inlet (90),
means (84) mounting said fuel pump in said fuel tank, and
a return conduit (78) conducting surplus fuel from said engine back to said fuel tank,
said fuel strainer (10) comprising:
a first porous membrane (12,14) having a first restriction to fluid flow thereacross formed into a sealed bag (16),
a second porous membrane (18) having a second restriction to fluid flow thereacross less than said first restriction to fluid flow across said first porous membrane,
means mounting said second porous membrane (18) in said sealed bag (16) such that said inner porous membrane defines a partition dividing said sealed bag into a first fuel chamber (20) on one side of said partition and a second fuel chamber (22) on the other side of said partition,
a first means (24) connecting said first fuel chamber to said return conduit (78) such that all of said surplus fuel flows into said first fuel chamber (20),
a second means (28) connecting said second fuel chamber (22) to said inlet (90) of said fuel pump (82) so that a zone of low pressure in said second fuel chamber when said fuel pump is on induces a pressure gradient across said partition and across said first porous membrane,
said surplus fuel in said first fuel chamber (20) flowing across said partition into said second fuel chamber (22) in preference to new bulk fuel from said fuel tank across said first porous membrane, and
a vapor orifice means (36) on said sealed bag defining a vapor passage from said first fuel chamber (20) to said fuel tank (80).

2. The fuel strainer (10) recited in claim 1 wherein said first means (24) connecting said first fuel chamber (20) to said return conduit (78) comprises:
a first metal ferrule (24) crimped onto said first porous membrane (12,14) around a hole in said first porous membrane, and
said second means (28) connecting said second fuel chamber (22) to said inlet (90) of said fuel pump (82) comprises:
a second metal ferrule (28) crimped onto said first porous membrane and onto said partition (18) around a pair of aligned holes in said first porous membrane and in said partition.

3. The fuel strainer (10) recited in claim 2 further comprising:
a first tubular mesh reinforcement (38) in said first fuel chamber (20), and
a second tubular mesh reinforcement (40) in said second fuel chamber (22).

## Patentansprüche

1. Kraftstoffsieb (10) in einem Kraftfahrzeugkraftstoffsystem (76), umfassend
einen Kraftstofftank (80),
eine Kraftstoffpumpe (82), die einen Auslaß, der mit einem Motor des Fahrzeuges verbunden ist, und einen Einlaß (90) aufweist,
ein Mittel (84), um die Kraftstoffpumpe in dem Kraftstofftank anzubringen, und
eine Rückleitung (78), die überschüssigen Kraftstoff von dem Motor zurück zu dem Kraftstofftank leitet,
wobei das Kraftstoffsieb (10) umfaßt:
eine erste poröse Membran (12, 14), die eine erste Beschränkung einer Fluidströmung hindurch aufweist und zu einer verschlossenen Tasche (16) ausgebildet ist,
eine zweite poröse Membran (18), die eine zweite Beschränkung einer Fluidströmung hindurch aufweist, die kleiner als die erste Beschränkung einer Fluidströmung durch die erste poröse Membran ist,
ein Mittel, um die zweite poröse Membran (18) in der verschlossenen Tasche (16) derart anzubringen, daß die innere poröse Membran eine Trennwand festlegt, welche die verschlossene Tasche in eine erste Kraftstoffkammer (20) auf der einen Seite der Trennwand und eine zweite Kraftstoffkammer (22) auf der anderen Seite der Trennwand teilt,
ein erstes Mittel (24), das die erste Kraftstoffkammer mit der Rückleitung (78) derart verbindet, daß der gesamte überschüssige Kraftstoff in die erste Kraftstoffkammer (20) strömt,
ein zweites Mittel (28), das die zweite Kraftstoffkammer (22) mit dem Einlaß (90) der Kraftstoffpumpe (82) derart verbindet, daß, wenn die Kraftstoffpumpe eingeschaltet ist, ein Niederdruckbereich in der zweiten Kraftstoffkammer einen Druckgradienten über der Trennwand und über der ersten porösen Membran verursacht,
wobei der überschüssige Kraftstoff in der ersten Kraftstoffkammer (20) durch die Trennwand in die zweite Kraftstoffkammer (22) vorzugsweise vor einer neuen Kraftstoffmenge aus dem Kraftstofftank durch die erste poröse Membran strömt, und
ein Dampföffnungsmittel (36) an der verschlossenen Tasche, das einen Dampfdurchgang aus der ersten Kraftstoffkammer (20) zu dem Kraftstofftank (80) festlegt.

2. Kraftstoffsieb (10) nach Anspruch 1, wobei das erste Mittel (24), das die erste Kraftstoffkammer (20) mit der Rückleitung (78) verbindet,
einen ersten Metallringbeschlag (24) umfaßt, der auf die erste poröse Membran (12, 14) um ein Loch in der ersten porösen Membran herum gecrimpt ist, und
wobei das zweite Mittel (28), das die zweite Kraftstoffkammer (22) mit dem Einlaß (90) der Kraftstoffpumpe (82) verbindet,
einen zweiten Metallringbeschlag (28) umfaßt, der auf die erste poröse Membran und auf die Trennwand (18) um zwei ausgerichtete Löcher in der ersten porösen Membran und in der Trennwand herum gecrimpt ist.

3. Kraftstoffsieb (10) nach Anspruch 2, das ferner
eine erste rohrförmige Maschenverstärkung (38) in der ersten Kraftstoffkammer (20) und
eine zweite rohrförmige Maschenverstärkung (40) in der zweiten Kraftstoffkammer (22) umfaßt.

## Revendications

1. Filtre à carburant (10) d'un système de carburant (86) de véhicule à moteur comportant :
un réservoir de carburant (80),
une pompe à carburant (82) ayant une évacuation reliée au moteur dudit véhicule et une entrée (90),
des moyens (84) de montage de ladite pompe à carburant dans ledit réservoir de carburant, et
un conduit de retour (78) ramenant le carburant en surplus provenant dudit moteur vers ledit réservoir de carburant,
ledit filtre à carburant (10) comportant :
une première membrane poreuse (12, 14) ayant une première limitation d'écoulement de fluide à travers celle-ci formée dans un sac étanche (16),
une seconde membrane poreuse (18) ayant une seconde limitation d'écoulement de fluide à travers celle-ci plus faible que ladite première limitation d'écoulement de fluide à travers ladite première membrane poreuse,
des moyens de montage de ladite seconde membrane poreuse (18) dans ledit sac étanche (16) de telle sorte que ladite membrane poreuse intérieure délimite une cloison de séparation divisant ledit sac étanche en une première chambre de carburant (20) d'un côté de ladite cloison de séparation, et une seconde chambre de carburant (22) de l'autre côté de ladite cloison de séparation,
des premiers moyens (24) reliant ladite première chambre de carburant audit conduit de retour (78) de sorte que tout ledit carburant en surplus s'écoule dans ladite première chambre de carburant (20),
des seconds moyens (28) reliant ladite seconde chambre de carburant (22) à ladite entrée (90) de ladite pompe à carburant (82) de sorte qu'une zone de faible pression existant dans ladite seconde chambre de carburant lorsque ladite pompe à carburant est active, entraîne un gradient de pression à travers ladite cloison de séparation et à travers ladite première membrane poreuse,
ledit carburant en surplus situé dans ladite première chambre de carburant (20) s'écoulant à travers ladite cloison de séparation jusque dans ladite seconde chambre de carburant (22) de préférence vers du nouveau carburant tout-venant provenant dudit réservoir de carburant à travers ladite première membrane poreuse, et
des moyens formant orifice de vapeur (36) situés sur ledit sac étanche définissant un passage pour vapeur à partir de ladite première chambre de carburant (20) vers ledit réservoir de carburant (80).

2. Filtre à carburant (10) selon la revendication 1, dans lequel lesdits premiers moyens (24) reliant ladite première chambre de carburant (20) audit conduit de retour (78) comportent :
une première virole métallique (24) sertie sur ladite première membrane (12, 14) autour d'un trou de ladite première membrane poreuse, et
les seconds moyens (28), reliant ladite seconde chambre de carburant (22) à ladite entrée (90) de ladite pompe à carburant (82), comportent :
une seconde virole métallique (28) sertie sur ladite première membrane poreuse et sur ladite cloison de séparation (18) autour d'une paire de trous alignés située dans ladite première membrane poreuse et dans ladite cloison de séparation.

3. Filtre de carburant (10) selon la revendication 2, comportant de plus :
un premier renforcement en treillis tubulaire (38) situé dans ladite première chambre de carburant (20), et
un second renforcement en treillis tubulaire (40) situé dans ladite seconde chambre de carburant (22).
